# EUROPEAN PATENT SPECIFICATION

(11) **EP 4 175 348 B1**
(45) Date of publication and mention of the grant of the patent: **25.03.2026**
(21) Application number: 22204001.6
(22) Date of filing: 27.10.2022
(51) Int. Cl.: H04W 24/02

(54) **RADIO CONFIGURATION PARAMETER OPTIMIZATION BY USING A DUAL CONTROL ALGORITHM**
FUNKKONFIGURATIONSPARAMETEROPTIMIERUNG UNTER VERWENDUNG EINES DOPPELSTEUERUNGSALGORITHMUS
OPTIMISATION DE PARAMÈTRES DE CONFIGURATION RADIO À L'AIDE D'UN ALGORITHME DE COMMANDE DOUBLE

(30) Priority: 28.10.2021 FI 20216119
(43) Date of publication of application: 03.05.2023
(73) Proprietor: Nokia Solutions and Networks Oy, 02610 Espoo (FI)
(72) Inventor: Song, Jian, 91120 Palaiseau (FR); Kovács, István Zsolt, 9000 Aalborg (DK); Butt, Muhammad Majid, Naperville, 60540 (US); Pedersen, Klaus Ingemann, 9000 Aalborg (DK)
(74) Representative: Papula Oy

(56) References cited:
- US-A1- 2016 366 565
- YOU HANLIANG ET AL: "User Clustering Scheme for Downlink Hybrid NOMA Systems Based on Genetic Algorithm", IEEE ACCESS, IEEE, USA, vol. 8, 13 July 2020 (2020-07-13), pages 129461 - 129468, XP011800283, DOI: 10.1109/ACCESS.2020.3009018
- KUMARESAN S PRABHA ET AL: "Efficient User Clustering Using a Low-Complexity Artificial Neural Network (ANN) for 5G NOMA Systems", IEEE ACCESS, IEEE, USA, vol. 8, 28 September 2020 (2020-09-28), pages 179307 - 179316, XP011813023, DOI: 10.1109/ACCESS.2020.3027777

## Description

### TECHNICAL FIELD

The present disclosure relates generally to the field of wireless communications. More specifically, the present disclosure relates to a network node configured to adaptively control and optimize radio configuration parameters by using two separate but interconnected control algorithms, as well as to a method for operating the network node and a corresponding computer program product.

### BACKGROUND

There are multiple examples of Machine Learning (ML) algorithms for a wireless communication network (e.g., a Next-Generation Radio Access Network (NG-RAN)) which offer various Radio Resource Management (RRM) improvements. One of such ML algorithms is a Reinforcement Learning (RL) algorithm that, for example, provides a low-complexity mechanism for solving the problem of User Equipment (UE) transmission parameter optimization for Uplink (UL) Open Loop Power Control (OLPC) for different UE clusters within a serving cell. However, such an RL-based solution typically relies on a set of input parameters which must be chosen carefully to obtain the best performance of the RL algorithm. Moreover, despite the prior art studies, it is still non-trivial how to design a low-complexity and, at the same time, robust RL-based solution for radio configuration parameter optimization.

US 2015181519 A1 discloses a network node and a method for controlling uplink power control. The method comprises collecting measurement reports from UEs. The method comprises creating clusters of low power radio base stations (RBSs) and macro RBSs, where each cluster comprises one low power RBS and at least one macro RBS. The method further comprises identifying the macro RBS with the lowest path loss for those UEs connected to the low power RBS, and determining the level of the path loss and an interference level in the low power RBS caused by UEs connected to the macro RBS for those UEs connected to the macro RBS.

The prior art also discloses a robust two-level learning approach for power control in uplink ultra-dense heterogeneous networks (HetNets) (see MAKHANBET, M. ET AL. Users first: a robust two-level learning of power control in uplink ultra-dense HetNets. In: IEEE Access Nov. 16, 2020, Vol. 8, 205712-205726, <DOI:10.1109/ACCESS.2020.3037737>). According to this approach, the per-user power control allows users to transmit with full power to maintain a stable connection, but it also causes a higher outage probability during the uplink transmission. A robust distributed energy-efficient uplink power control scheme in the HetNets is also proposed, which accounts for multi-user interference coordination. A Jarvis-Patric (JP) algorithm is adopted for the users' clustering, with an extra term named degree of membership. A novel 2-level distributed cooperative learning (DCL) scheme is also proposed, where users act as self-organized agents and optimize power control at local and global levels jointly.

The prior art also discloses a non-orthogonal multiple access (NOMA) technology for improving bandwidth utilization efficiency and reducing power consumption (see YOU HANLIANG ET AL: "User Clustering Scheme for Downlink Hybrid NOMA Systems Based on Genetic Algorithm", IEEE ACCESS, IEEE, USA, vol. 8, 13 July 2020 (2020-07-13), pages 129461-129468). In the NOMA technology, the optimization of user clustering in the NOMA scenario is performed, where the goal is to maximize the system total throughput under minimum rate constraints. The NOMA technology is characterized in that there is no limit on the number of users in each cluster. The NOMA technology can significantly reduce computational complexity and have a better performance compared with schemes based on other heuristic algorithms and random user clustering with greedy strategy.

The prior art also discloses an artificial neural network (ANN) approach for user clustering in the downlink of a 5G NOMA system to maximize throughput performance at an acceptable complexity (see KUMARESAN S PRABHA ET AL: "Efficient User Clustering Using a Low-Complexity Artificial Neural Network (ANN) for 5G NOMA Systems", IEEE ACCESS, IEEE, USA, vol. 8, 28 September 2020 (2020-09-28), pages 179307-179316). In this approach, an ANN model is first trained with a historical dataset, which contains the transmitting powers and channel gains of downlink NOMA users, along with the information of corresponding clusters which maximize the throughput performance of the system. Next, validation is performed to tune the values of hyper-parameters, such as a learning rate, a length of training data, and an epoch learned during training to validate cluster formation and to avoid over-fitting of the model. Finally, the ANN model is tested with the learned parameters and tuned hyper-parameters, to predict the formation of clusters and to evaluate the accuracy of the model. This approach can obtain a significant reduction in terms of complexity.

US 2016/366565 A1 discloses a method for grouping wireless devices of a cell of a communication network. The method comprises acquiring user network data for wireless devices in the cell and cell network data for the cell, determining groups for the wireless devices and assigning each of the wireless devices to one of the groups using unsupervised ML with the user network data and the cell network data as input. The method further comprises assigning a wireless device entering the cell to one of the groups using supervised ML with the user network data of said wireless device and the cell network data as input.

Common to the prior art ML/RL-based solutions is that they do not give details for the most efficient algorithm initialization, as well as do not explain how to select a detailed ML/RL algorithm for UE clustering within the serving cell and radio configuration parameter optimization.

There is therefore a need for a technical solution that enables the efficient online adaptation of the set of the most important (in terms of performance) input parameters which, in turn, control the functionality of a low complexity ML/RL algorithm when the ML/RL algorithm is used for the radio configuration parameter optimization.

### SUMMARY

This summary is provided to introduce a selection of concepts in a simplified form that are further described below in the detailed description. This summary is not intended to identify key features of the present disclosure, nor is it intended to be used to limit the scope of the present disclosure.

It is an objective of the present disclosure to provide a technical solution that enables radio configuration parameter optimization in a low-complexity, time-efficient and robust manner.

The objective above is achieved by the features of the independent claims in the appended claims. Further embodiments and examples are apparent from the dependent claims, the detailed description and the accompanying drawings.

Other features and advantages of the present disclosure will be apparent upon reading the following detailed description and reviewing the accompanying drawings.

### BRIEF DESCRIPTION OF THE DRAWINGS

The present disclosure is explained below with reference to the accompanying drawings in which:
FIG. 1 shows a block diagram of a network node in accordance with one example embodiment;
FIG. 2 shows a flowchart of a method for operating the network node shown in FIG. 1 in accordance with one example embodiment;
FIG. 3 shows a block diagram of a dual control algorithm in accordance with one example embodiment;
FIG. 4 shows a block diagram of a first control algorithm included in the dual control algorithm shown in FIG. 3 in accordance with one example embodiment;
FIG. 5 shows a block diagram of a second control algorithm included in the dual control algorithm shown in FIG. 3 in accordance with one example embodiment; and
FIG. 6 shows a block diagram of a wireless communication system in which various example embodiments of the present disclosure may be implemented.

### DETAILED DESCRIPTION

Various embodiments of the present disclosure are further described in more detail with reference to the accompanying drawings. However, the present disclosure can be embodied in many other forms and should not be construed as limited to any certain structure or function discussed in the following description. In contrast, these embodiments are provided to make the description of the present disclosure detailed and complete.

According to the detailed description, it will be apparent to the ones skilled in the art that the scope of the present disclosure encompasses any embodiment thereof, which is disclosed herein, irrespective of whether this embodiment is implemented independently or in concert with any other embodiment of the present disclosure. For example, the apparatus and method disclosed herein can be implemented in practice by using any numbers of the embodiments provided herein. Furthermore, it should be understood that any embodiment of the present disclosure can be implemented using one or more of the elements presented in the appended claims.

Unless otherwise stated, any embodiment recited herein as "example embodiment" should not be construed as preferable or having an advantage over other embodiments.

Although the numerative terminology, such as "first", "second", "third", "fourth", etc., may be used herein to describe various elements or features, it should be understood that these elements or features should not be limited by this numerative terminology. This numerative terminology is used herein only to distinguish one element or feature from another element or feature. For example, in the embodiments disclosed herein, a first control algorithm could be renamed a second control algorithm, and vice versa, without departing from the teachings of the present disclosure.

According to the example embodiments disclosed herein, a User Equipment (UE) (also known as a client device) may refer to an electronic computing device that is configured to perform wireless communications. The UE may be implemented as a mobile station, a mobile terminal, a mobile subscriber unit, a mobile phone, a cellular phone, a smart phone, a cordless phone, a personal digital assistant (PDA), a wireless communication device, a laptop computer, a tablet computer, a gaming device, a netbook, a smartbook, an ultrabook, a medical mobile device or equipment, a biometric sensor, a wearable device (e.g., a smart watch, smart glasses, a smart wrist band, etc.), an entertainment device (e.g., an audio player, a video player, etc.), a vehicular component or sensor (e.g., a driver-assistance system), a smart meter/sensor, an unmanned vehicle (e.g., an industrial robot, a quadcopter, etc.) and its component (e.g., a self-driving car computer), industrial manufacturing equipment, a global positioning system (GPS) device, an Internet-of-Things (IoT) device, an Industrial loT (IIoT) device, a machine-type communication (MTC) device, a group of Massive loT (MloT) or Massive MTC (mMTC) devices/sensors, or any other suitable mobile device configured to support wireless communications. In some embodiments, the UE may refer to at least two collocated and inter-connected UEs thus defined.

As used in the example embodiments disclosed herein, a network node may refer to a fixed point of communication for a UE in a particular wireless communication network. The network node may be referred to as a base transceiver station (BTS) in terms of the 2G communication technology, a NodeB in terms of the 3G communication technology, an evolved NodeB (eNodeB) in terms of the 4G communication technology, and a gNB in terms of the 5G New Radio (NR) communication technology. The network node may serve different cells, such as a macrocell, a microcell, a picocell, a femtocell, and/or other types of cells. The macrocell may cover a relatively large geographic area (for example, at least several kilometers in radius). The microcell may cover a geographic area less than two kilometers in radius, for example. The picocell may cover a relatively small geographic area, such, for example, as offices, shopping malls, train stations, stock exchanges, etc. The femtocell may cover an even smaller geographic area (for example, a home). Correspondingly, the network node serving the macrocell may be referred to as a macro node, the network node serving the microcell may be referred to as a micro node, and so on.

According to the example embodiments disclosed herein, a wireless communication network, in which a UE and a network node communicate with each other, may refer to a cellular or mobile network, a Wireless Local Area Network (WLAN), a Wireless Personal Area Networks (WPAN), a Wireless Wide Area Network (WWAN), a satellite communication (SATCOM) system, or any other type of wireless communication networks. Each of these types of wireless communication networks supports wireless communications according to one or more communication protocol standards. For example, the cellular network may operate according to the Global System for Mobile Communications (GSM) standard, the Code-Division Multiple Access (CDMA) standard, the Wide-Band Code-Division Multiple Access (WCDM) standard, the Time-Division Multiple Access (TDMA) standard, or any other communication protocol standard, the WLAN may operate according to one or more versions of the IEEE 802.11 standards, the WPAN may operate according to the Infrared Data Association (IrDA), Wireless USB, Bluetooth, or ZigBee standard, and the WWAN may operate according to the Worldwide Interoperability for Microwave Access (WiMAX) standard.

The operational efficiency and the overall cost of operation of a wireless communication network may be reduced by means of network function automation and rational radio resource management. All of this may be achieved by using control algorithms based on Machine Learning (ML) approaches in network nodes. Such ML-based control algorithms may allow one to simplify and automate complex network tasks, resulting in a more efficient network operation and improved quality of wireless communications.

However, the existing ML-based control algorithms typically rely on a set on input parameters which must be chosen carefully to obtain the best algorithm performance. It is therefore desirable to make such ML-based control algorithms able to efficiently perform the online adaptation of the set of the most performance-determining parameters which are then used to control the functionality of the ML-based control algorithm itself, when the ML-based control algorithm is used for radio configuration parameter optimization. More specifically, it is required to make these ML-based control algorithms:
(1) sufficiently light-weight in terms of computational resources - i.e., such that these algorithms allow the execution of many (several 10's or 100's) algorithm instances for/in the same network node;
(2) robust to dynamically changing radio conditions in a cell - i.e., such that these algorithms allow for nearly real-time adaptation to new radio conditions in each network node (e.g., gNB), ideally even without intervention of additional network entities (e.g., an Operation, Administration, and Maintenance (OAM) function, a Network Data Analytics Function (NWDAF), etc.), and certainly without human intervention; and
(3) flexible to handle a multi-objective optimization in the cell - i.e., such that these algorithms allow the assessment of different optimized radio transmission parameter setups under heterogeneous Key Performance Indicator (KPI) (e.g., Quality-of-Service (QoS)) requirements/constraints.

The example embodiments disclosed herein provide a technical solution that allows mitigating or even eliminating the above-sounded drawbacks peculiar to the prior art. In particular, the technical solution disclosed herein involves using a dual control algorithm to adaptively control and optimize radio configuration parameters (e.g., transmission power control parameters). The dual control algorithm comprises first and second control algorithms, each of which is executed independently whenever certain one or more trigger events occur. The first control algorithm is used for obtaining one or more UE clusters and a KPI requirement for each UE cluster based on UE information, while the second control algorithm is used for obtaining optimized radio configuration parameters for each UE cluster based on the output data of the first control algorithm. The second control algorithm is also configured to monitor its performance and send a special signal to the first control algorithm when its performance degrades. The occurrence of such a signal is among the trigger events that cause the execution of the first control algorithm. The proposed configuration of the dual control algorithm disclosed herein corresponds to all requirements (1)-(3) mentioned above.

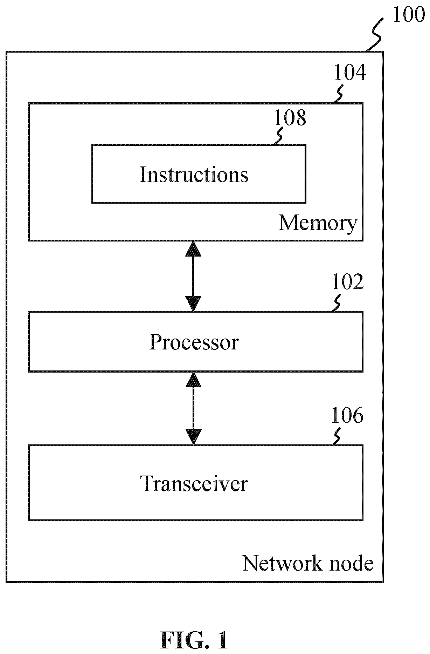

FIG. 1 shows a block diagram of a network node 100 in accordance with one example embodiment. The network node 100 is intended to communicate with one or more UEs in any of the above-described wireless communication networks. As shown in FIG. 1, the network node 100 comprises a processor 102, a memory 104, and a transceiver 106. The memory 104 stores processor-executable instructions 108 which, when executed by the processor 102, cause the processor 102 to perform the aspects of the present disclosure, as will be described below in more detail. It should be noted that the number, arrangement, and interconnection of the constructive elements constituting the network node 100, which are shown in FIG. 1, are not intended to be any limitation of the present disclosure, but merely used to provide a general idea of how the constructive elements may be implemented within the network node 100. For example, the processor 102 may be replaced with several processors, as well as the memory 104 may be replaced with several removable and/or fixed storage devices, depending on particular applications. Furthermore, in some embodiments, the transceiver 106 may be implemented as two individual devices, with one for a receiving operation and another for a transmitting operation. Irrespective of its implementation, the transceiver 106 is intended to be capable of performing different operations required to perform the data reception and transmission, such, for example, as signal modulation/demodulation, encoding/decoding, etc. In other embodiments, the transceiver 106 may be part of the processor 102 itself.

The processor 102 may be implemented as a CPU, general-purpose processor, single-purpose processor, microcontroller, microprocessor, application specific integrated circuit (ASIC), field programmable gate array (FPGA), digital signal processor (DSP), complex programmable logic device, etc. It should be also noted that the processor 102 may be implemented as any combination of one or more of the aforesaid. As an example, the processor 102 may be a combination of two or more microprocessors.

The memory 104 may be implemented as a classical nonvolatile or volatile memory used in the modern electronic computing machines. As an example, the nonvolatile memory may include Read-Only Memory (ROM), ferroelectric Random-Access Memory (RAM), Programmable ROM (PROM), Electrically Erasable PROM (EEPROM), solid state drive (SSD), flash memory, magnetic disk storage (such as hard drives and magnetic tapes), optical disc storage (such as CD, DVD and Blu-ray discs), etc. As for the volatile memory, examples thereof include Dynamic RAM, Synchronous DRAM (SDRAM), Double Data Rate SDRAM (DDR SDRAM), Static RAM, etc.

The processor-executable instructions 108 stored in the memory 104 may be configured as a computer-executable program code which causes the processor 102 to perform the aspects of the present disclosure. The computer-executable program code for carrying out operations or steps for the aspects of the present disclosure may be written in any combination of one or more programming languages, such as Java, C++, or the like. In some examples, the computer-executable program code may be in the form of a high-level language or in a pre-compiled form and be generated by an interpreter (also pre-stored in the memory 104) on the fly.

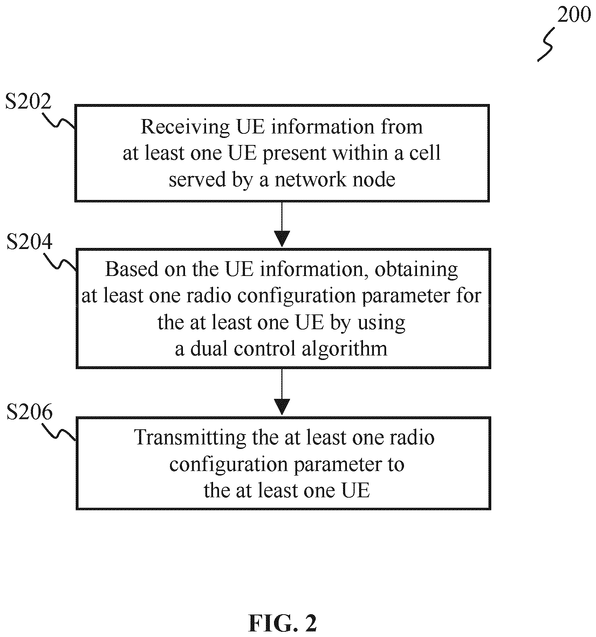

FIG. 2 shows a flowchart of a method 200 for operating the network node 100 in accordance with one example embodiment.

The method 200 starts with a step S202, in which the processor 102 receives (e.g., by using the transceiver 106) UE information from one or more UEs present within a cell served by the network node 100. It should be noted that the UE(s) may transmit the UE information to the network node 100 either in response to a corresponding request from the network node 100, or each time when a connection establishment procedure is initiated (e.g., during the transition of the UE(s) from a Radio Resource Control Idle (RRC_IDLE) or RRC Inactive (RRC_INACTIVE) state to a full RRC connection (RRC_CONNECTED) state), or periodically (e.g., once per minute, hour, etc.). The UE information may comprise at least one of the following:
- a UE type/class/category (e.g., the UE type may indicate that the UE(s) is(are) smartphones, tablet computers, vehicle components, etc.),
- a type and/or quality of one or more communication services to be used by the UE(s) (e.g., Enhanced Mobile Broadband (eMBB), Ultra-Reliable Low-Latency Communication (URLLC), massive Machine Type Communication (mMTC) services, etc.), and
- a type of one or more radio configuration parameters to be used and associated information.

Said associated information may, for example, include UE transmission measurement data and UE-specific configuration information. The UE transmission measurement data may, for example, include a UE transmission power (including, e.g., Multiple-Input Multiple-Output Beamforming (MIMO BF) capabilities), current cell radio capacity/load per service types (current KPIs and performance counters), etc. The UE-specific configuration information may, for example, include a UE throughput, a UE power consumption model, a UE radio energy efficiency, UE positioning information, etc..

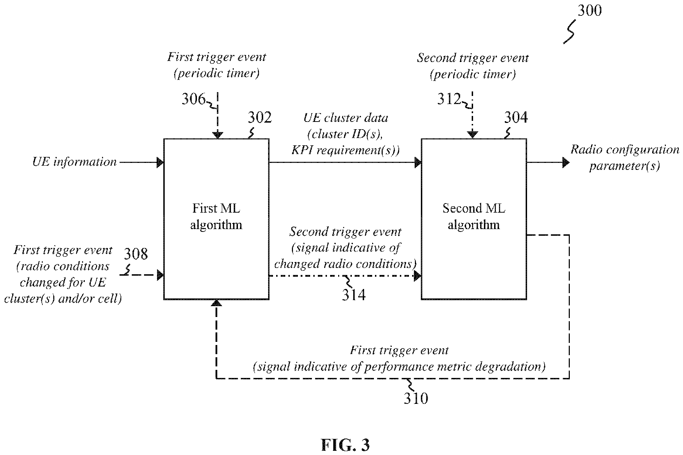

Then, the method 200 proceeds to a step S204, in which the processor 102 obtains, based on the UE information, one or more radio configuration parameters (e.g., one or more radio resources, transmission power control parameters, measurement gaps, UL beamforming parameters, a number of supported timing advance groups, or any combination thereof) for the UE(s) by using the dual control algorithm. The specifics of the dual control algorithm will be discussed below with reference to FIGs. 3-5.

After that, the method 200 goes no to a step S206, in which the processor 102 transmits the obtained radio configuration parameter(s) to the UE(s). This may be done by using at least one of dedicated signaling (e.g., an RRC message) and broadcast signaling (e.g., a Data Radio Bearer (DRB)).

FIG. 3 shows a block diagram of a dual control algorithm 300 in accordance with one example embodiment. The dual control algorithm 300 may be used by the processor 102 of the network node 100 in the step S202 of the method 200 to obtain the radio configuration parameter(s) for the UE(s). As shown in FIG. 3, the dual control algorithm 300 comprises a first control algorithm 302 and a second control algorithm 304 which have forward and feedback connections therebetween. In response to certain one or more trigger events, each of the first control algorithm 302 and the second control algorithm 304 executes its own iterative steps for an intended purpose/functionality, utilising corresponding input data and generating corresponding output data, and potentially with different time periods.

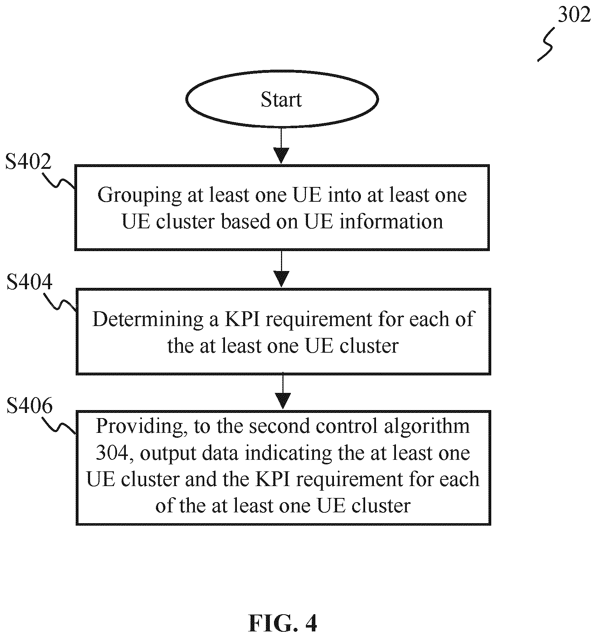

FIG. 4 shows a block diagram of the first control algorithm 302 included in the dual control algorithm 300 in accordance with one example embodiment. As shown in FIG. 4, the first control algorithm comprises steps S402-S406. In the step S402, the first control algorithm 302 groups the UE(s) into one or more UE clusters based on the UE information (e.g., each UE cluster may comprise UEs of the same type). In the step S404, the first control algorithm 302 determines a KPI requirement (e.g., a QoS requirement) for each UE cluster. In the step S406, the first control algorithm 302 provides, to the second control algorithm 304, output data indicating the UE cluster(s) (e.g., cluster ID(s) and associated UE ID(s)) and the KPI requirement(s) for each UE cluster. The first control algorithm 302 may be implemented based on a supervised ML algorithm, an unsupervised ML algorithm, a rule-based algorithm, or any combination thereof. In preferred embodiments, the first control algorithm 302 may use a K-mean clustering algorithm, a K-Nearest-Neighbours (KNN) algorithm, a Support Vector Machine (SVM) algorithm, or any combination thereof.

In one example embodiment, the network node 100 may receive UE-specific historical data for each UE from another network node in the wireless communication network. For example, said another network node may be a network node that has previously served the UE(s) which is(are) now within the cell of the network node 100. The UE-specific historical data may indicate optimized radio configuration (e.g., transmission) parameters in a former timeline, or a UE transmission performance over time, cell condition(s)/load, and/or UE location within the previous cell (these data may be especially useful when supervised learning is used in the dual control algorithm 300). In this case, the step S402 of the first control algorithm 400 may be performed based on the UE information in combination with the UE-specific historical data.

Referring back to FIG. 3, the first control algorithm 302 is executed by the processor 102 of the network node 100 whenever one or more first trigger events 306-310 occur. For convenience, the first trigger events 306-310 for the first control algorithm 302 are schematically shown in FIG. 3 by using long-dash arrows. The occurrence of one of the first trigger events 306-310 is enough to cause the processor 102 to execute the first control algorithm 302.

More specifically, the first trigger event 306 is a trigger event based on a periodic timer (i.e., the processor 102 of the network node 100 starts the periodic timer for the first control algorithm 302, e.g., before, after or during the step S202 of the method 200 and executes the first control algorithm 302 whenever the periodic timer expires). The first trigger event 308 is a trigger event based on a change in radio conditions for the cell and/or the UE cluster(s) and/or cell admission control (i.e., the processor 102 of the network node 100 monitors any change in the radio conditions and/or cell admission control and executes the first control algorithm 302 whenever such a change occurs). The first trigger event 310 is a trigger event based on a signal from the second control algorithm 304, which indicates that the performance metric of the second control algorithm 304 degrades, whereupon the first control algorithm 302 should update the UE cluster(s) and/or the KPI requirement for each UE cluster (it should be noted that the signal from the second control algorithm 304 is a feedback signal in the configuration of the dual control algorithm 300 which is shown in FIG. 3).

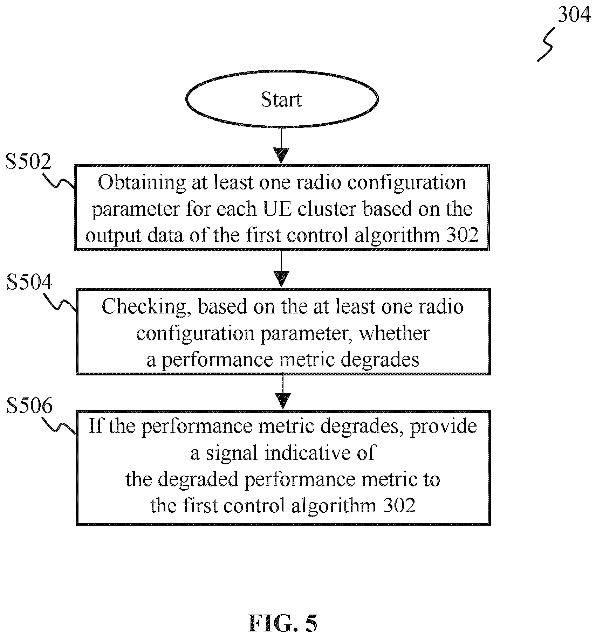

FIG. 5 shows a block diagram of the second control algorithm 304 included in the dual control algorithm 300 in accordance with one example embodiment. As shown in FIG. 5, the second control algorithm 304 comprises steps S502-S506. In the step S502, the second control algorithm 304 obtains the radio configuration parameter(s) based on the output data from the first control algorithm 302. In the step S504, the second control algorithm 304 checks, based on the radio configuration parameter(s), whether the performance metric degrades. In the step S506, if the performance metric degrades, the second control algorithm 304 provides the signal indicative of the degraded performance metric to the first control algorithm 302. The second control algorithm 304 may be based on any ML algorithm. In a preferred embodiment, the second control algorithm 304 may be implemented as a low-complexity Reinforcement Learning (RL) algorithm. As for the performance metric, it may be selected from at least one of the following: a learning performance, an algorithm convergence or stability metric, and an objective function. Correspondingly, the degradation of the performance metric may mean at least one of the following:
- learning performance degradation/instability (e.g., a temporal difference (TD) changes rapidly);
- unaccepted objection function variation (e.g., in case of using an RL algorithm as the second control algorithm 304, its discounted accumulated reward function monotonically decreases); and
- invalid/insufficient exploration of an RL algorithm used as the second control algorithm 304) (e.g., the obtained radio configuration parameter(s) is(are) not selected from an explored action range).

Referring back to FIG. 3, the second control algorithm 304 is executed by the processor 102 of the network node 100 whenever one or more second trigger events 312 and 314 occur. For convenience, the second trigger events 312 and 314 for the second control algorithm 304 are schematically shown in FIG. 3 by using dash-dot arrows. The occurrence of one of the second triggers 312 and 314 is enough to cause the processor 102 to execute the second control algorithm 304.

More specifically, similar to the first trigger event 306, the second trigger event 312 is a trigger event based on a periodic timer (i.e., the processor 102 of the network node 100 starts the periodic timer for the second control algorithm 304, e.g., before, after or during the step S202 of the method 200 and executes the second control algorithm 304 whenever the periodic timer expires). The second trigger event 314 is a trigger event based on a signal from the first control algorithm 302, which indicates the above-discussed change(s) in the radio conditions for the cell and/or the UE cluster(s) and/or cell admission control (it should be noted that the signal from the first control algorithm 302 is a feedforward signal in the configuration of the dual control algorithm 300 which is shown in FIG. 3).

Thus, the configuration of the dual control algorithm 300 provides for the interconnection of the first control algorithm 302 and the second control algorithm 304 via the specified trigger events (i.e., based on the above-indicated signal from the first control algorithm 302 and/or the above-indicated signal from the second control algorithm 304). This means that the first control algorithm 302 triggers the execution of the second control algorithm 304, and vice versa, even when all other triggers are absent (i.e., when there is no periodic timer, and/or no change in the radio conditions for the cell and/or the UE cluster(s) and/or cell admission control).

It should be also noted that the first control algorithm 302 and the second control algorithm 304 may be executed in non-successive order. Of course, the second control algorithm 304 needs the output data from the first control algorithm 302 during at least its first iteration, but afterwards the second control algorithm 304 may operate independently from the first control algorithm 302 (e.g., parallel to the first control algorithm 302) based on the output data received during the at least one first iteration. In general, the first control algorithm 302 may be executed independently and iteratively to generate the UE cluster(s) and the cluster-related data (the cluster ID(s), the UE ID(s) associated with each UE cluster, and the KPI requirement for each UE cluster), and, at the same time, the second control algorithm 304 may be executed independently and iteratively to generate the optimized radio configuration parameter(s) for each UE cluster.

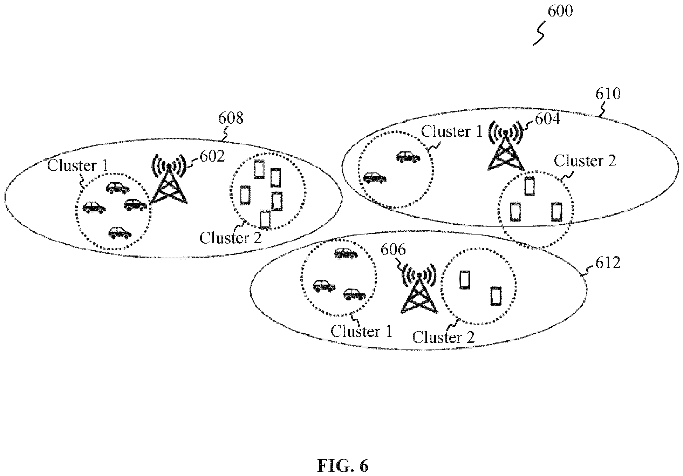

FIG. 6 shows a block diagram of a wireless communication system 600 in which various example embodiments of the present disclosure may be implemented. The system 600 comprises three network nodes 602-606 serving cells 608-612, respectively. Each of the network nodes 602-606 is assumed to be implemented as the network node 100 that is configured to operate in accordance with the method 200 based on the dual control algorithm 300. It is additionally assumed that each of the network nodes 602-606 generates two similar UE Clusters 1 and 2 by executing the first control algorithm 302. More specifically, UE Cluster 1 comprises URLLC UEs (e.g., vehicle components), while UE Cluster 2 comprises eMBB UEs (e.g., smartphones). Each of UE Clusters 1 and 2 is characterized by a distinct QoS requirement. Furthermore, by executing the second control algorithm 304 implemented as a RL algorithm, the optimal QoS-aware UL radio resource allocation may be achieved via the proper designation of reward and cost functions to jointly maximize an average cluster throughput for the UEs of Cluster 1 and minimize an average latency for the UEs of Cluster 0. In this example, due to UE mobility, radio conditions for each of UE Clusters 1 and 2 would change, thereby causing each of the network nodes 602-606 to update the cluster-related data. Thus, (at least) the first trigger event 308 for the first control algorithm 302 will push the first control algorithm 302 to update and allocate the two types of the UEs into new UE clusters, which subsequently triggers the second control algorithm 304 to run for optimal UL radio resource allocation.

In another example, the UEs present in each of the cells 608-612 may differ from each other in a relative Reference Signal Received Power (RSRP). Then, the first control algorithm 302 may be used in each of the network node 602-606 to provide the enhanced auto-clustering of the UEs based on any of the first trigger events 306-310 (e.g., due to the varying radio conditions as indicated in the first trigger event 308 for the first control algorithm 302). At the same time, the second control algorithm 304 may be implemented as an RL-based control algorithmconfigured to solve the problem of UL Transmit Power Control (TPC) parameter optimization beyond the average cell/UE cluster throughput. However, the second control algorithm is not limited to cell throughput/Spectral Efficiency (SE) maximization and may also be aimed at energy efficiency or jointly optimization.

It should be noted that each step or operation of the method 200, as well as the algorithms 302 and 304, or any combinations of the steps or operations, can be implemented by various means, such as hardware, firmware, and/or software. As an example, one or more of the steps or operations described above can be embodied by processor executable instructions, data structures, program modules, and other suitable data representations. Furthermore, the processor-executable instructions which embody the steps or operations described above can be stored on a corresponding data carrier and executed by the processor 102. This data carrier can be implemented as any computer-readable storage medium configured to be readable by said at least one processor to execute the processor executable instructions. Such computer-readable storage media can include both volatile and nonvolatile media, removable and non-removable media. By way of example, and not limitation, the computer-readable media comprise media implemented in any method or technology suitable for storing information. In more detail, the practical examples of the computer-readable media include, but are not limited to information-delivery media, RAM, ROM, EEPROM, flash memory or other memory technology, CD-ROM, digital versatile discs (DVD), holographic media or other optical disc storage, magnetic tape, magnetic cassettes, magnetic disk storage, and other magnetic storage devices.

Although the example embodiments of the present disclosure are described herein, it should be noted that any various changes and modifications could be made in the embodiments of the present disclosure, without departing from the scope of legal protection which is defined by the appended claims. In the appended claims, the word "comprising" does not exclude other elements or operations, and the indefinite article "a" or "an" does not exclude a plurality. The mere fact that certain measures are recited in mutually different dependent claims does not indicate that a combination of these measures cannot be used to advantage.

## Claims

1. A network node (100) in a wireless communication network, comprising:
at least one processor (102); and
at least one memory (104) including a computer program code;
wherein the at least one memory (104) and the computer program code are configured to, with the at least one processor (102), cause the network node (100) to:
- receive (S202) User Equipment, UE, information from at least one UE present within a cell served by the network node (100);
- based on the UE information, obtain (S204) at least one radio configuration parameter for the at least one UE by using a dual control algorithm (300); and
- transmit (S206) the at least one radio configuration parameter to the at least one UE;
wherein the dual control algorithm (300) comprises a first control algorithm (302) and a second control algorithm (304), the first control algorithm (302) being configured to run when at least one first trigger event occurs, the second control algorithm (304) being configured to run when at least one second trigger event occurs, the at least one first trigger event comprising an event (306) at which a periodic timer for the first control algorithm (302) expires and/or an event (308) at which a radio condition for the cell changes, the first control algorithm (302) being further configured to provide a signal indicative of the changed radio condition to the second control algorithm (304), and the at least one second trigger event comprising an event (312) at which a periodic timer for the second control algorithm (304) expires and/or an event (314) at which the signal indicative of the changed radio condition is provided to the second control algorithm (304);
wherein the first control algorithm (302) is further configured, when run, to: group (S402) the at least one UE into at least one UE cluster based on the UE information;
determine (S404) at least one Key Performance Indicator, KPI, requirement for each of the at least one UE cluster; and provide (S406), to the second control algorithm (304), output data indicating the at least one UE cluster and the at least one KPI requirement for each of the at least one UE cluster;
wherein the second control algorithm (304) has a performance metric and is further configured, when run, to: obtain (S502) the at least one radio configuration parameter for each of the at least one UE cluster based on the output data from the first control algorithm (302); check (S504), based on the at least one radio configuration parameter, whether the performance metric degrades; and if the performance metric degrades, provide (S506) a signal indicative of the degraded performance metric to the first control algorithm (302); and
wherein the at least one first trigger event further comprises an event (310) at which the signal indicative of the degraded performance metric is provided to the first control algorithm (302).

2. The network node (100) of claim 1, wherein the first control algorithm (302) is further configured to provide, to the second control algorithm (304), a signal indicative of a changed radio condition for any of the at least one UE cluster, and wherein the at least one second trigger event further comprises an event at which the signal indicative of the changed radio condition for any of the at least one UE cluster is provided to the second control algorithm (304).

3. The network node (100) of claim 1 or 2, wherein the UE information comprises at least one of:
- a UE type,
- a type and/or quality of at least one communication service to be used, and
- a type of at least one radio configuration parameter to be used.

4. The network node (100) of any one of claims 1 to 3, wherein the KPI requirement comprises at least one of a Quality-of-Service requirement, a throughput requirement, and an uplink, UL, power requirement.

5. The network node (100) of any one of claims 1 to 4, wherein the at least one radio configuration parameter comprises at least one of a radio resource, a transmission power control parameter, a measurement gap, an UL beamforming parameter, and a number of supported timing advance groups.

6. The network node (100) of any one of claims 1 to 5, wherein:
- the first control algorithm (302) comprises at least one of a Machine Learning, ML, algorithm and a rule-based algorithm; and/or
- the second control algorithm (304) comprises a ML algorithm.

7. The network node (100) of any one of claims 1 to 6, wherein the at least one memory (104) and the computer program code are further configured to, with the at least one processor (102), cause the network node (100) to receive, from another network node, UE-specific historical data for the at least one UE, the UE-specific historical data relating to a UE transmission performance over time and/or the UE transmission performance over a UE location within the cell, and wherein the first control algorithm (302) is configured to group the at least one UE into the at least one UE cluster based on the UE information and the UE-specific historical data.

8. A method (200) for operating a network node (100) in a wireless communication network, comprising:
- receiving (S202) User Equipment, UE, information from at least one UE present within a cell served by the network node (100);
- based on the UE information, obtaining (S204) at least one radio configuration parameter for the at least one UE by using a dual control algorithm (300); and
- transmitting (S206) the at least one radio configuration parameter to the at least one UE;
wherein the dual control algorithm (300) comprises a first control algorithm (302) and a second control algorithm (304), the first control algorithm (302) running when at least one first trigger event occurs, the second control algorithm (304) running when at least one second trigger event occurs, the at least one first trigger event comprising an event (306) at which a periodic timer for the first control algorithm (302) expires and/or an event (308) at which a radio condition for the cell changes, the first control algorithm (302) providing a signal indicative of the changed radio condition to the second control algorithm (304), and the at least one second trigger event comprising an event (312) at which a periodic timer for the second control algorithm (304) expires and/or an event (314) at which the signal indicative of the changed radio condition is provided to the second control algorithm (304);
wherein the first control algorithm (302), when run, groups (S402) the at least one UE into at least one UE cluster based on the UE information;
determines (S404) at least one Key Performance Indicator, KPI, requirement for each of the at least one UE cluster; and provides (S406), to the second control algorithm (304), output data indicating the at least one UE cluster and the at least one KPI requirement for each of the at least one UE cluster;
wherein the second control algorithm (304) has a performance metric and, when run, obtains (S502) the at least one radio configuration parameter for each of the at least one UE cluster based on the output data from the first control algorithm (302); checks (S504), based on the at least one radio configuration parameter, whether the performance metric degrades; and if the performance metric degrades, provides (S506) a signal of the degraded performance metric to the first control algorithm (302); and
wherein the at least one first trigger event further comprises an event (310) at which the signal of the degraded performance metric is provided to the first control algorithm (302).

9. The method (200) of claim 8, wherein the first control algorithm (302) further provides, to the second control algorithm (304), a signal indicative of a changed radio condition for any of the at least one UE cluster, and wherein the at least one second trigger event further comprises an event at which the signal indicative of the changed radio condition for any of the at least one UE cluster is provided to the second control algorithm (304).

10. The method (200) of claim 8 or 9, further comprising receiving, from another network node, UE-specific historical data for the at least one UE, the UE-specific historical data relating to a UE transmission performance over time and/or the UE transmission performance over a UE location within the cell, and the first control algorithm (302) groups the at least one UE into the at least one UE cluster based on the UE information and the UE-specific historical data.

11. A computer program product comprising a computer-readable storage medium, wherein the computer-readable storage medium stores a computer code which, when executed by the at least one processor (102) of the network node (100) according to any one of claims 1 to 7, causes the at least one processor to perform the method (200) according to any one of claims 8 to 10.

## Patentansprüche

1. Netzwerkknoten (100) in einem drahtlosen Kommunikationsnetzwerk, umfassend: mindestens einen Prozessor (102); und
mindestens einen Speicher (104), der einen Computerprogrammcode enthält;
wobei der mindestens eine Speicher (104) und der Computerprogrammcode dazu konfiguriert sind, mit dem mindestens einen Prozessor (102) den Netzwerkknoten (100) zu veranlassen:
∘ Benutzergeräte-, UE-, Informationen von mindestens einem UE, das in einer von dem Netzwerkknoten (100) bedienten Zelle vorhanden ist, zu empfangen (S202);
∘ basierend auf den UE-Informationen mindestens einen Funkkonfigurationsparameter für das mindestens eine UE unter Verwendung eines dualen Steuerungsalgorithmus (300) zu erhalten (S204); und
∘ den mindestens einen Funkkonfigurationsparameter an das mindestens eine UE zu übertragen (S206);
wobei der duale Steuerungsalgorithmus (300) einen ersten Steuerungsalgorithmus (302) und einen zweiten Steuerungsalgorithmus (304) umfasst, wobei der erste Steuerungsalgorithmus (302) dazu konfiguriert ist, zu laufen, wenn mindestens ein erstes Auslöseereignis auftritt, wobei der zweite Steuerungsalgorithmus (304) dazu konfiguriert ist, zu laufen, wenn mindestens ein zweites Auslöseereignis auftritt, wobei das mindestens eine erste Auslöseereignis ein Ereignis (306), bei dem ein periodischer Zeitgeber für den ersten Steuerungsalgorithmus (302) abläuft, und/oder ein Ereignis (308), bei dem sich eine Funkbedingung für die Zelle ändert, umfasst, wobei der erste Steuerungsalgorithmus (302) ferner dazu konfiguriert ist, ein Signal, das die geänderte Funkbedingung anzeigt, an den zweiten Steuerungsalgorithmus (304) bereitzustellen, und wobei das mindestens eine zweite Auslöseereignis ein Ereignis (312), bei dem ein periodischer Zeitgeber für den zweiten Steuerungsalgorithmus (304) abläuft, und/oder ein Ereignis (314), bei dem das Signal, das die geänderte Funkbedingung anzeigt, dem zweiten Steuerungsalgorithmus (304) bereitgestellt wird, umfasst;
wobei der erste Steuerungsalgorithmus (302) ferner dazu konfiguriert ist, bei seiner Ausführung: das mindestens eine UE basierend auf den UE-Informationen in mindestens einen UE-Cluster zu gruppieren (S402); mindestens eine Schlüsselleistungsindikator, KPI, Anforderung für jeden des mindestens einen UE-Clusters zu bestimmen (S404); und dem zweiten Steuerungsalgorithmus (304) Ausgabedaten bereitzustellen (S406), die den mindestens einen UE-Cluster und die mindestens eine KPI-Anforderung für jeden des mindestens einen UE-Clusters anzeigen;
wobei der zweite Steuerungsalgorithmus (304) eine Leistungsmetrik aufweist und ferner dazu konfiguriert ist, bei seiner Ausführung: den mindestens einen Funkkonfigurationsparameter für jeden des mindestens einen UE-Clusters basierend auf den Ausgabedaten des ersten Steuerungsalgorithmus (302) zu erhalten (S502); basierend auf dem mindestens einen Funkkonfigurationsparameter zu prüfen (S504), ob sich die Leistungsmetrik verschlechtert; und wenn sich die Leistungsmetrik verschlechtert, ein Signal, das die verschlechterte Leistungsmetrik anzeigt, dem ersten Steuerungsalgorithmus (302) bereitzustellen (S506); und
wobei das mindestens eine erste Auslöseereignis ferner ein Ereignis (310) umfasst, bei dem das Signal, das die verschlechterte Leistungsmetrik anzeigt, dem ersten Steuerungsalgorithmus (302) bereitgestellt wird.

2. Netzwerkknoten (100) nach Anspruch 1, wobei der erste Steuerungsalgorithmus (302) ferner dazu konfiguriert ist, dem zweiten Steuerungsalgorithmus (304) ein Signal bereitzustellen, das eine geänderte Funkbedingung für irgendeinen des mindestens einen UE-Clusters anzeigt, und wobei das mindestens eine zweite Auslöseereignis ferner ein Ereignis umfasst, bei dem das Signal, das die geänderte Funkbedingung für irgendeinen des mindestens einen UE-Clusters anzeigt, dem zweiten Steuerungsalgorithmus (304) bereitgestellt wird.

3. Netzwerkknoten (100) nach Anspruch 1 oder 2, wobei die UE-Informationen mindestens eines der folgenden umfassen:
∘ einen UE-Typ,
∘ einen Typ und/oder eine Qualität mindestens eines zu verwendenden Kommunikationsdienstes, und
∘ einen Typ mindestens eines zu verwendenden Funkkonfigurationsparameters.

4. Netzwerkknoten (100) nach einem der Ansprüche 1 bis 3, wobei die KPI-Anforderung mindestens eines der folgenden umfasst: eine Dienstgüteanforderung, eine Durchsatzanforderung und eine Uplink, UL, Leistungsanforderung.

5. Netzwerkknoten (100) nach einem der Ansprüche 1 bis 4, wobei der mindestens eine Funkkonfigurationsparameter mindestens eines der folgenden umfasst, eine Funkressource, einen Sendeleistungssteuerungsparameter, eine Messlücke, einen UL-Strahlformungsparameter und eine Anzahl unterstützter Zeitvorschubgruppen.

6. Netzwerkknoten (100) nach einem der Ansprüche 1 bis 5, wobei:
∘ der erste Steuerungsalgorithmus (302) mindestens eines der folgenden umfasst: einen maschinellen Lern-, ML-, Algorithmus und einen regelbasierten Algorithmus; und/oder
∘ der zweite Steuerungsalgorithmus (304) einen ML-Algorithmus umfasst.

7. Netzwerkknoten (100) nach einem der Ansprüche 1 bis 6, wobei der mindestens eine Speicher (104) und der Computerprogrammcode ferner dazu konfiguriert sind, mit dem mindestens einen Prozessor (102) den Netzwerkknoten (100) zu veranlassen, von einem anderen Netzwerkknoten UE-spezifische historische Daten für das mindestens eine UE zu empfangen, wobei sich die UE-spezifischen historischen Daten auf eine UE-Übertragungsleistung über die Zeit und/oder die UE-Übertragungsleistung über einen UE-Standort innerhalb der Zelle beziehen, und wobei der erste Steuerungsalgorithmus (302) dazu konfiguriert ist, das mindestens eine UE basierend auf den UE-Informationen und den UE-spezifischen historischen Daten in den mindestens einen UE-Cluster zu gruppieren.

8. Verfahren (200) zum Betreiben eines Netzwerkknotens (100) in einem drahtlosen Kommunikationsnetzwerk, umfassend:
∘ Empfangen (S202) von Benutzergeräte-, UE-, Informationen von mindestens einem UE, das in einer von dem Netzwerkknoten (100) bedienten Zelle vorhanden ist;
∘ basierend auf den UE-Informationen, Erhalten (S204) mindestens eines Funkkonfigurationsparameters für das mindestens eine UE unter Verwendung eines dualen Steuerungsalgorithmus (300); und
∘ Übertragen (S206) des mindestens einen Funkkonfigurationsparameters an das mindestens eine UE;
wobei der duale Steuerungsalgorithmus (300) einen ersten Steuerungsalgorithmus (302) und einen zweiten Steuerungsalgorithmus (304) umfasst, wobei der erste Steuerungsalgorithmus (302) läuft, wenn mindestens ein erstes Auslöseereignis auftritt, wobei der zweite Steuerungsalgorithmus (304) läuft, wenn mindestens ein zweites Auslöseereignis auftritt, wobei das mindestens eine erste Auslöseereignis ein Ereignis (306), bei dem ein periodischer Zeitgeber für den ersten Steuerungsalgorithmus (302) abläuft, und/oder ein Ereignis (308), bei dem sich eine Funkbedingung für die Zelle ändert, umfasst, wobei der erste Steuerungsalgorithmus (302) ein Signal, das die geänderte Funkbedingung anzeigt, dem zweiten Steuerungsalgorithmus (304) bereitstellt, und wobei das mindestens eine zweite Auslöseereignis ein Ereignis (312), bei dem ein periodischer Zeitgeber für den zweiten Steuerungsalgorithmus (304) abläuft, und/oder ein Ereignis (314), bei dem das Signal, das die geänderte Funkbedingung anzeigt, dem zweiten Steuerungsalgorithmus (304) bereitgestellt wird, umfasst;
wobei der erste Steuerungsalgorithmus (302) bei seiner Ausführung das mindestens eine UE basierend auf den UE-Informationen in mindestens einen UE-Cluster gruppiert (S402); mindestens eine Schlüsselleistungsindikator-, KPI-, Anforderung für jeden des mindestens einen UE-Clusters bestimmt (S404); und dem zweiten Steuerungsalgorithmus (304) Ausgabedaten bereitstellt (S406), die den mindestens einen UE-Cluster und die mindestens eine KPI-Anforderung für jeden des mindestens einen UE-Clusters anzeigen;
wobei der zweite Steuerungsalgorithmus (304) eine Leistungsmetrik aufweist und bei seiner Ausführung den mindestens einen Funkkonfigurationsparameter für jeden des mindestens einen UE-Clusters basierend auf den Ausgabedaten des ersten Steuerungsalgorithmus (302) erhält (S502);
basierend auf dem mindestens einen Funkkonfigurationsparameter prüft (S504), ob sich die Leistungsmetrik verschlechtert; und wenn sich die Leistungsmetrik verschlechtert, ein Signal der verschlechterten Leistungsmetrik dem ersten Steuerungsalgorithmus (302) bereitstellt (S506); und
wobei das mindestens eine erste Auslöseereignis ferner ein Ereignis (310) umfasst, bei dem das Signal der verschlechterten Leistungsmetrik dem ersten Steuerungsalgorithmus (302) bereitgestellt wird.

9. Verfahren (200) nach Anspruch 8, wobei der erste Steuerungsalgorithmus (302) ferner dem zweiten Steuerungsalgorithmus (304) ein Signal bereitstellt, das eine geänderte Funkbedingung für irgendeinen des mindestens einen UE-Clusters anzeigt, und wobei das mindestens eine zweite Auslöseereignis ferner ein Ereignis umfasst, bei dem das Signal, das die geänderte Funkbedingung für irgendeinen des mindestens einen UE-Clusters anzeigt, dem zweiten Steuerungsalgorithmus (304) bereitgestellt wird.

10. Verfahren (200) nach Anspruch 8 oder 9, ferner umfassend das Empfangen, von einem anderen Netzwerkknoten, von UE-spezifischen historischen Daten für das mindestens eine UE, wobei sich die UE-spezifischen historischen Daten auf eine UE-Übertragungsleistung über die Zeit und/oder die UE-Übertragungsleistung über einen UE-Standort innerhalb der Zelle beziehen, und wobei der erste Steuerungsalgorithmus (302) das mindestens eine UE basierend auf den UE-Informationen und den UE-spezifischen historischen Daten in den mindestens einen UE-Cluster gruppiert.

11. Computerprogrammprodukt, umfassend ein computerlesbares Speichermedium, wobei das computerlesbare Speichermedium einen Computercode speichert, der, wenn er von dem mindestens einen Prozessor (102) des Netzwerkknotens (100) nach einem der Ansprüche 1 bis 7 ausgeführt wird, den mindestens einen Prozessor veranlasst, das Verfahren (200) nach einem der Ansprüche 8 bis 10 auszuführen.

## Revendications

1. Nœud de réseau (100) dans un réseau de communication sans fil, comprenant :
au moins un processeur (102) ; et
au moins une mémoire (104) incluant un code de programme informatique ;
dans lequel l'au moins une mémoire (104) et le code de programme informatique sont configurés pour, avec l'au moins un processeur (102), amener le nœud de réseau (100) à :
∘ recevoir (S202) des informations d'équipement utilisateur, UE, d'au moins un UE présent dans une cellule desservie par le nœud de réseau (100) ;
∘ sur la base des informations UE, obtenir (S204) au moins un paramètre de configuration radio pour l'au moins un UE en utilisant un algorithme de commande dual (300) ; et
∘transmettre (S206) l'au moins un paramètre de configuration radio à l'au moins un UE ;
dans lequel l'algorithme de commande dual (300) comprend un premier algorithme de commande (302) et un second algorithme de commande (304), le premier algorithme de commande (302) étant configuré pour s'exécuter lorsqu'au moins un premier événement déclencheur se produit, le second algorithme de commande (304) étant configuré pour s'exécuter lorsqu'au moins un second événement déclencheur se produit, l'au moins un premier événement déclencheur comprenant un événement (306) auquel une temporisation périodique pour le premier algorithme de commande (302) expire et/ou un événement (308) auquel une condition radio pour la cellule change, le premier algorithme de commande (302) étant en outre configuré pour fournir un signal indicatif de la condition radio modifiée au second algorithme de commande (304), et l'au moins un second événement déclencheur comprenant un événement (312) auquel une temporisation périodique pour le second algorithme de commande (304) expire et/ou un événement (314) auquel le signal indicatif de la condition radio modifiée est fourni au second algorithme de commande (304) ;
dans lequel le premier algorithme de commande (302) est en outre configuré, lors de son exécution, pour : grouper (S402) l'au moins un UE dans au moins un cluster d'UE sur la base des informations UE ; déterminer (S404) au moins une exigence d'indicateur de performance clé, KPI, pour chacun de l'au moins un cluster d'UE ; et fournir (S406), au second algorithme de commande (304), des données de sortie indiquant l'au moins un cluster d'UE et l'au moins une exigence KPI pour chacun de l'au moins un cluster d'UE ;
dans lequel le second algorithme de commande (304) a une métrique de performance et est en outre configuré, lors de son exécution, pour : obtenir (S502) l'au moins un paramètre de configuration radio pour chacun de l'au moins un cluster d'UE sur la base des données de sortie du premier algorithme de commande (302) ; vérifier (S504), sur la base de l'au moins un paramètre de configuration radio, si la métrique de performance se dégrade ; et si la métrique de performance se dégrade, fournir (S506) un signal indicatif de la métrique de performance dégradée au premier algorithme de commande (302) ; et
dans lequel l'au moins un premier événement déclencheur comprend en outre un événement (310) auquel le signal indicatif de la métrique de performance dégradée est fourni au premier algorithme de commande (302).

2. Nœud de réseau (100) selon la revendication 1, dans lequel le premier algorithme de commande (302) est en outre configuré pour fournir, au second algorithme de commande (304), un signal indicatif d'une condition radio modifiée pour l'un quelconque de l'au moins un cluster d'UE, et dans lequel l'au moins un second événement déclencheur comprend en outre un événement auquel le signal indicatif de la condition radio modifiée pour l'un quelconque de l'au moins un cluster d'UE est fourni au second algorithme de commande (304).

3. Nœud de réseau (100) selon la revendication 1 ou 2, dans lequel les informations UE comprennent au moins l'un des éléments suivants :
∘ un type d'UE,
∘ un type et/ou une qualité d'au moins un service de communication à utiliser, et
∘ un type d'au moins un paramètre de configuration radio à utiliser.

4. Nœud de réseau (100) selon l'une quelconque des revendications 1 à 3, dans lequel l'exigence KPI comprend au moins l'une des éléments suivants : une exigence de qualité de service, une exigence de débit et une exigence de puissance UL de liaison montante.

5. Nœud de réseau (100) selon l'une quelconque des revendications 1 à 4, dans lequel l'au moins un paramètre de configuration radio comprend au moins l'un des éléments suivants : une ressource radio, un paramètre de commande de puissance de transmission, un écart de mesure, un paramètre de formation de faisceau UL et un nombre de groupes d'avance temporelle pris en charge.

6. Nœud de réseau (100) selon l'une quelconque des revendications 1 à 5, dans lequel :
∘ le premier algorithme de commande (302) comprend au moins l'un des éléments suivants : un algorithme d'apprentissage automatique, ML, et un algorithme basé sur des règles ; et/ou
∘ le second algorithme de commande (304) comprend un algorithme ML.

7. Nœud de réseau (100) selon l'une quelconque des revendications 1 à 6, dans lequel l'au moins une mémoire (104) et le code de programme informatique sont en outre configurés pour, avec l'au moins un processeur (102), amener le nœud de réseau (100) à recevoir, d'un autre nœud de réseau, des données historiques spécifiques à l'UE pour l'au moins un UE, les données historiques spécifiques à l'UE se rapportant à une performance de transmission de l'UE dans le temps et/ou à la performance de transmission de l'UE sur un emplacement de l'UE dans la cellule, et dans lequel le premier algorithme de commande (302) est configuré pour grouper l'au moins un UE dans l'au moins un cluster d'UE sur la base des informations UE et des données historiques spécifiques à l'UE.

8. Procédé (200) pour faire fonctionner un nœud de réseau (100) dans un réseau de communication sans fil, comprenant :
∘ recevoir (S202) des informations d'équipement utilisateur, UE, d'au moins un UE présent dans une cellule desservie par le nœud de réseau (100) ;
∘ sur la base des informations UE, obtenir (S204) au moins un paramètre de configuration radio pour l'au moins un UE en utilisant un algorithme de commande dual (300) ; et
∘ transmettre (S206) l'au moins un paramètre de configuration radio à l'au moins un UE ;
dans lequel l'algorithme de commande dual (300) comprend un premier algorithme de commande (302) et un second algorithme de commande (304), le premier algorithme de commande (302) s'exécutant lorsqu'au moins un premier événement déclencheur se produit, le second algorithme de commande (304) s'exécutant lorsqu'au moins un second événement déclencheur se produit, l'au moins un premier événement déclencheur comprenant un événement (306) auquel une temporisation périodique pour le premier algorithme de commande (302) expire et/ou un événement (308) auquel une condition radio pour la cellule change, le premier algorithme de commande (302) fournissant un signal indicatif de la condition radio modifiée au second algorithme de commande (304), et l'au moins un second événement déclencheur comprenant un événement (312) auquel une temporisation périodique pour le second algorithme de commande (304) expire et/ou un événement (314) auquel le signal indicatif de la condition radio modifiée est fourni au second algorithme de commande (304) ;
dans lequel le premier algorithme de commande (302), lors de son exécution, groupe (S402) l'au moins un UE dans au moins un cluster d'UE sur la base des informations UE ; détermine (S404) au moins une exigence d'indicateur de performance clé, KPI, pour chacun de l'au moins un cluster d'UE ; et fournit (S406), au second algorithme de commande (304), des données de sortie indiquant l'au moins un cluster d'UE et l'au moins une exigence KPI pour chacun de l'au moins un cluster d'UE ;
dans lequel le second algorithme de commande (304) a une métrique de performance et, lors de son exécution, obtient (S502) l'au moins un paramètre de configuration radio pour chacun de l'au moins un cluster d'UE sur la base des données de sortie du premier algorithme de commande (302) ; vérifie (S504), sur la base de l'au moins un paramètre de configuration radio, si la métrique de performance se dégrade ; et si la métrique de performance se dégrade, fournit (S506) un signal de la métrique de performance dégradée au premier algorithme de commande (302) ; et
dans lequel l'au moins un premier événement déclencheur comprend en outre un événement (310) auquel le signal de la métrique de performance dégradée est fourni au premier algorithme de commande (302).

9. Procédé (200) selon la revendication 8, dans lequel le premier algorithme de commande (302) fournit en outre, au second algorithme de commande (304), un signal indicatif d'une condition radio modifiée pour l'un quelconque de l'au moins un cluster d'UE, et dans lequel l'au moins un second événement déclencheur comprend en outre un événement auquel le signal indicatif de la condition radio modifiée pour l'un quelconque de l'au moins un cluster d'UE est fourni au second algorithme de commande (304).

10. Procédé (200) selon la revendication 8 ou 9, comprenant en outre la réception, d'un autre nœud de réseau, de données historiques spécifiques à l'UE pour l'au moins un UE, les données historiques spécifiques à l'UE se rapportant à une performance de transmission de l'UE dans le temps et/ou à la performance de transmission de l'UE sur un emplacement de l'UE dans la cellule, et le premier algorithme de commande (302) groupe l'au moins un UE dans l'au moins un cluster d'UE sur la base des informations UE et des données historiques spécifiques à l'UE.

11. Produit de programme informatique comprenant un support de stockage lisible par ordinateur, dans lequel le support de stockage lisible par ordinateur stocke un code informatique qui, lorsqu'il est exécuté par l'au moins un processeur (102) du nœud de réseau (100) selon l'une quelconque des revendications 1 à 7, amène l'au moins un processeur à exécuter le procédé (200) selon l'une quelconque des revendications 8 à 10.
